# EUROPEAN PATENT APPLICATION

(11) **EP 4 099 521 A1**
(43) Date of publication of application: **07.12.2022**
(21) Application number: 21177783.4
(22) Date of filing: 04.06.2021
(51) Int. Cl.: H01S 3/06, H01S 3/08, H01S 3/139

(54) **RADIATION AMPLIFYING SYSTEM**

(71) Applicant: Universität Stuttgart, 70174 Stuttgart (DE)
(72) Inventor: Piehler, Stefan, 70180 Stuttgart (DE); Dannecker, Benjamin Maria, 70565 Stuttgart (DE); Schmidt, Kevin, 71083 Herrenberg (DE); Graf, Thomas, 71154 Nufringen (DE); Sawodny, Oliver, 70186 Stuttgart (DE); Abdou-Ahmed, Marwan, 70565 Stuttgart (DE); Dietrich, Tom, 70197 Stuttgart (DE)
(74) Representative: Hoeger, Stellrecht & Partner Patentanwälte mbB

(57) **Abstract**

A radiation amplifying device comprising a resonator with an optical assembly defining an optical path for a to be amplified radiation field, is provided which comprises a sensor system for detecting values of one parameter or several parameters of the radiation amplifying device and/or of the to be amplified radiation field, a controller signal transmittingly connected to the sensor system and the controller being designed to receive and to evaluate parameter values detected by the sensor system, an actuating system acting on the resonator in particular for altering its interaction with the to be amplified radiation field, and the actuating system being controlled by the controller based on the received and evaluated parameter values.

## Description

The invention relates to a radiation amplifying device for amplifying a to be amplified radiation field and to a method for amplifying a to be amplified radiation field.

The problem underlying the invention is to improve such a radiation amplifying device and to improve a method for amplifying a to be amplified radiation field.

The problem is solved in embodi ents of the invention by a radiation amplifying device which comprises a resonator with an optical assembly, wherein the optical assembly defines an optical path for a to be amplified radiation field and the radiation amplifying device further comprises a sensor system for detecting values of one parameter or several parameters of the radiation amplifying device and/or of the to be amplified radiation field and the radiation amplifying device further comprises a controller signal transmittingly connected to the sensor system and the controller is designed to receive and to evaluate parameter values detected by the sensor system and the radiation amplifying device further comprises an actuating system acting on the resonator, in particular for altering its interaction with the to be amplified radiation field, and the actuating system is controlled by the controller based on the received and evaluated parameter values.

One advantage of the solution is in particular that the controller is enabled to provide control signals to the actuating system for acting on the resonator and adapting its interaction with the to be amplified radiation field based on the received and evaluated parameter values which have been detected by the sensor system and therefore the control of the resonator and the to be amplified radiation field is improved.

In particular, the radiation amplifying device is enabled to provide an improved amplified radiation field which complies with the demands of a user of the radiation amplifying device because the controller obtains information about the resonator and/or to be amplified radiation field through the detected and received parameter values and therefore is enabled to more precisely adjust the interaction between the resonator and the to be amplified radiation field by sending more accurate control variables to the actuating system for acting correspondingly on the resonator.

For example the controller is enabled to react on changes and/or disturbances in the resonator and/or to be amplified radiation field by sending correspondingly adjusted control signals because the controller is provided with information about the resonator and/or the to be amplified radiation field from the received parameter values.

In particular, due to the detection of parameter values and the control based on the detected and evaluated parameter values the resonator and the to be amplified radiation field can be stabilized at a desired working point.

Advantageously, the detection of parameter values and control based on the same enables to shape the caustic and/or temporal and/or special intensity profile of the to be amplified radiation field within the resonator.

In particular, having control on the resonator based on the detected parameter values allows to adjust several characteristics of the to be amplified radiation field independently.

For example, the duration of pulses of the to be amplified radiation field can be tuned independently from the power.

For example, characteristics of the radiation field, for example the profile of the same and/or intensity variations can be tuned independently from the power of the to be amplified radiation field.

Advantageously, due to the improved control over the resonator based on the detected parameter values the resonator is operable not only at a predetermined working point but the available range of powers at which it can be used is increased.

For example due to the improved control, the resonator can be adjusted to be resonant for previewed modes and/or to suppress undesired modes.

In particular, the sensor system and the controller and the actuating system build up a feedback control loop for the resonator which for example provides the advantage that the control over the resonator and the to be amplified radiation field is improved because the controller is enabled to control the same based on the feedback provided via the parameter values by the sensor system and also is informed about the consequences of previously send control signals through the feedback control loop.

Further details about the controller have not been given so far.

In preferred embodiments a mathematical model of at least the resonator and/or of the to be amplified radiation field, and in particular of the interaction between the resonator and the to be amplified radiation field, is implemented in the controller. For controlling the actuating system the controller is programmed to evaluate the model based on the received parameter values.

In particular that provides the advantage that the controller is enabled to at least estimate and/or to determine detailed information about the resonator and/or of the to be amplified radiation field through the evaluation of the model based on the received detected parameter values.

In preferred embodiments the controller is programmed to at least estimate at least one characteristic property of the resonator and/or of the to be amplified radiation field. In particular the controller is programmed to at least estimate the state of the resonator and/or of the to be amplified radiation field. Advantageously, the controller is using the implemented model to estimate the at least one characteristic property and/or the state.

In particular, the controller is programmed to control the actuating system based on that estimated characteristic property and/or estimated state.

For example, the controller acquires more detailed information about the resonator and/or the to be amplified radiation field by estimating the at least one characteristic property and/or the state and therefore is enabled to adjust the resonator more accurately by controlling the actuating system accordingly.

Before and in the following, the term that the controller at least estimates a property, state or other feature is in particular to be understood, that within the controller an algorithm, for example the implemented model, is implemented and by inserting the received parameter values into the implemented algorithm and performing computations according to the implemented algorithm the controller obtains at least an estimate of the actual value of the property, state or other features in the resonator and/or to be amplified radiation field. Preferably, the controller is enabled to determine that actual value within the accuracy of the implemented algorithm.

Before and in the following, the term that the controller controls the actuating system based on an estimate, in particular of a property, state and/or feature, in particular is to be understood, that the controller obtains the estimate and compares it with a desired, for example presetted or inputted, target value and based on that comparison the controller computes, for example using the implemented algorithm, in particular the implemented model, an appropriate adjustment of at least one control variable in order to achieve with that adjustment a closer congruence between the actual value and the desired target value.

In particular, the one or several parameters, the values of which should meet the desired target values are different to the one or several control parameters.

In advantageous embodiments, the controller is programmed to at least estimate an interaction between the resonator and the to be amplified radiation field, for example the interaction between the optical assembly and the to be amplified radiation field. In particular the controller is using the implemented model therefore.

In particular, the controller is programmed to control the actuating system based on that estimated interaction.

One advantage thereof is for example that the controller is enabled to also estimate a reaction of the to be amplified radiation field on an adjustment of the resonator and to estimate the mutual impacts of the radiation field and resonator and therefore is enabled to more accurately adjust the resonator for a desired to be amplified radiation field.

Preferably, the controller is programmed to at least estimate a reaction of the resonator and/or of the to be amplified radiation field on an adjustment of at least one control variable. In particular, the controller is using the implemented model for estimating this reaction.

In particular, with estimating the reaction on an adjustment the controller is enabled to determine more valuable adjustments for achieving more accurately a desired to be amplified radiation field.

For example, the controller is programmed to evaluate the estimate of the reaction and can therefore provide more accurate control signals for meeting a desired outcome.

In preferred embodiments the controller is programmed to evaluate the estimate of the reaction, whether it meets a desired outcome.

In particular, the controller is programmed to evaluate based on one of aforementioned estimates, whether to modify the adjustment of the control variable in cases in which the estimate does not meet a desired outcome or to control the actuating system in accordance with the adjusted control variable in cases in which the estimate meets a desired outcome.

In particular, the controller checks whether the estimate, for example an estimated reaction, meets the requirements of a desired outcome and if it does so, controls the actuating system in accordance with the adjusted control variables and otherwise modifies the control variable such that it better meets the required outcome.

Regarding an algorithm, in particular the mathematical model, implemented in the controller for evaluating parameter values and for controlling the actuating system no further detailed information have been given so far.

In particular, the implemented model comprises at least one algebraic equation and/or at least one differential equation and comprises in particular a set of algebraic and/or differential equations.

The equations of the model describe in particular the to be amplified radiation field and/or the resonator and preferably the interaction between the resonator and the to be amplified radiation field.

In particular, the implemented algorithm, in particular the implemented model, is dependent on a plurality of parameters, the values of which are in particular detected by the sensor system.

In some embodiments the model exhibits non-linearities, in particular for describing complex interactions between and within the resonator and to be amplified radiation field.

For example, the implemented equations are predictive for one characteristic property or several characteristic properties of the resonator and/or of the to be amplified radiation field.

Preferably, a state of the resonator and/or of the to be amplified radiation field can be reconstructed using the equations and incorporating the detected and received parameter values into the equations.

For example an inversion of the equations of the model and/or dynamical optimization problems are used in the evaluation implemented in the controller.

In preferred embodiments sensor fusion algorithms like extended and/or unscented Kalman filters and/or particle filters are implemented in the controller.

For example, within the controller an interactive algorithm is used, in particular for at least estimating and/or evaluating as mentioned before.

In some preferred embodiments, the implemented algorithm comprises decomposition of the modelled to be amplified radiation field, for example a decomposition in Eigenmodes of the radiation field.

In certain advantageous embodiments a machine learning routine is implemented in the controller. For example, the machine learning routine is an artificial neural network and/or a reinforcement learning. For example, using the machine learning routine the controller is enabled to improve its evaluation during operation. In particular, with increasing number of detected and received parameter values the estimates of the controller acquire better accuracy due to the machine learning routine.

Preferably, the controller is programmed to input the detected and received parameter values into the routine during the controlling operation and for example improves thereby its evaluation concurrently.

In particular, the controller is programmed to control the actuating system based on the outcome of that machine learning routine.

In some embodiments, a finite-element-algorithm is implemented in the controller for at least estimating and/or evaluating.

In some embodiments a proportional-integral-derivative control algorithm is implemented in the controller, in particular in addition or instead of one or several of the aforementioned algorithms. For example, this provides for some control variables for an efficient evaluation, in particular if the associated control parameter does not exhibit a complex interaction with other parameters, for example when there are no non-linearities present.

In particular, the controller is programmed to control the actuating system at least partly based on that control algorithm.

Preferably, the controller is programmed to evaluate the parameter values as well as to control the actuating system essentially in real time during operation of the device.

In particular, this improves the control of the controller because it is enabled to acquire appropriate values for the control variables based on the current estimated properties and/or states of the resonator and/or to be amplified radiation field.

In particular, the controller is programmed to evaluate the implemented model and/or algorithms essentially in real time.

In particular with the term "essentially in real time" within the present disclosure it is meant that the controller evaluates the parameter values within regular intervals which preferably are no longer then a typical time scale of the processes within the resonator and to be amplified radiation field.

For example, the typical time scale relates to a respond time of the to be amplified radiation field on a change in the optical assembly and/or the time scale of propagation of thermal induced distortions in the resonator, for example in its optical elements and/or a laser active unit and/or, a respond time of the resonator, in particular its optical elements and/or its laser active unit on an alteration of actuation by the actuating system.

For example, the evaluation and controlling is essentially in real time within the meaning of the present disclosure if they are performed regularly with a rate of at least 0,1 Hz, preferably at least 1 Hz, for example at least 5 Hz, in particular at least 10 Hz. The evaluation and controlling is essentially in real time within the meaning of the present disclosure in particular, if they are performed regularly with a rate which is for example equal or smaller than 500 Hz, in particular equal or smaller than 200 Hz, for example equal or smaller than 100 Hz, in particular equal or smaller than 50 Hz.

In particular, the controller is programmed to control the actuating system based on a series of previously detected and received parameter values. For example, taking the series of previously detected and received parameter values into account improves the evaluation and therefore a more accurate control can be achieved.

In particular, the parameter values of the series correspond to subsequent points in time.

For example, the implemented evaluation algorithm of the controller depends on the values of a parameter at different points in time and therefore a series of the respective parameter values have to be inputted in the algorithm and for example the outcome of the algorithm is more accurate because it takes an evolution in time into account.

Concerning the for example measured and/or estimated characteristic properties and parameters of the resonator and/or to be amplified radiation field no further detailed information have been given so far.

In particular, a characteristic property of the to be amplified radiation field is a local intensity profile of the same, preferably its transversal local intensity profile.

For example a radius of a radiation beam of the to be amplified radiation field is a characteristic property of the same.

In particular, a wave front, in particular a local ware front, of the to be amplified radiation field is a characteristic property of the same.

For example, properties of the electrical field of the to be amplified radiation field, for example local properties thereof, in particular a phase and/or amplitude thereof, are characteristic properties of the to be amplified radiation field which are considered.

In some preferred embodiments an intensity of one of several modes of the to be amplified radiation field is a considered characteristic property of the same.

In advantageous embodiments temporal variations in the radiation field, for example variations of the intensity and/or a duration and/or shape of pulses of the to be amplified radiation field are considered.

For example, the power of the to be amplified radiation field is a considered characteristic property of the same.

Preferably, the caustic of the to be amplified radiation field is a characteristic property of the same considered by the controller.

In particular, disturbances and/or distortions in the to be amplified radiation field are considered characteristic properties.

In particular, distortions in optical elements and/or the laser active unit of the resonator which are for example induced by the to be amplified radiation field and/or are thermally induced distortions, are considered characteristic properties.

Preferably, states of adaptable optical elements on which the actuating system acts on are considered characteristic properties.

For example, the controller comprises a memory, in particular for storing received detected parameter values and/or for storing presetted data and/or for storing received input data provided by a user of the radiation amplifying system.

For example, the prestored or inputted data comprise parameter values regarding the resonator, for example restrains on controllable parameters, and/or desirable values for characteristics of the resonator and/or to be amplified radiation field and/or other settable parameters of the implemented algorithm, for example the implemented model, in particular ranges of the aforementioned values and parameters.

For example, settable parameters of the algorithm, in particular of the model, concern, in particular set, desirable working ranges of the resonator and to be amplified radiation field.

In particular, the controller comprises at least one processor for compilation, for example for estimating and for evaluating the parameter values and for controlling the actuating system.

Concerning the resonator no further details have been given so far.

In particular, the resonator comprises at least one laser active unit.

In particular, the laser active unit comprises a laser active medium, in which in particular during operation of the device a population inversion is present.

In some preferred embodiments the laser active unit comprises also an optical element, for example a reflective element, in particular a reflective layer.

In particular, the resonator comprises a pumping energy source for providing pumping energy to the at least one laser active unit.

In some preferred embodiments, the pumping energy source provides a pumping radiation field for providing the pumping energy.

Advantageously, the influence of the pumping energy source is captured within the implemented model, for example its effects on the laser active medium, for example concerning thermally induced distortions in the laser active medium.

In some preferred embodiments the actuating system acts for example with at least one actuator on the pumping energy source, for example adjusts the provided pumping energy and/or alters properties of the provided pumping radiation field.

Concerning the optical assembly no further details have been given so far.

The optical assembly comprises in particular two reflective end elements in between which the optical path for the to be amplified radiation field is defined, wherein in particular the optical path has several branches in between.

In preferred embodiments the optical assembly comprises one directing optical element or several directing optical elements, in particular two directing optical elements, which direct the to be amplified radiation field onto the at least one laser active unit.

In particular, the optical assembly comprises one outcoupling element, at which a part of the to be amplified radiation field is coupled out to provide an amplified radiation field.

In particular, the optical assembly comprises at least one adaptable optical element, that is one adaptable element or several adaptable optical elements.

In the following, the mentioning of at least one adaptable optical element in connection with a feature is to be understood that the one adaptable optical element or one of the several adaptable optical elements exhibits that feature or that some, for example all, of the several optical elements exhibit the respective feature.

In particular, at least one of the reflective end elements and/or the one or several directing optical elements and/or the outcoupling element is at least one adaptable optical element.

Preferably, several of the aforementioned elements are adaptable optical elements.

In particular, a shape of a reflective surface of at least one adaptable optical element is adaptable. For example, an actuator of the actuating system acts on the surface to alter its shape.

In some preferred embodiments, at least one adaptable optical element has one degree of freedom which can be adapted by the actuating system.

In certain advantageous embodiments, at least one adaptable optical element has several, in particular quasi continuously distributed, degrees of freedom which are adaptable by the actuating system.

For example, with the several adaptable degrees of freedom phase shift delays of several modes of the to be amplified radiation field can be altered and adjusted.

With regard to the actuating system no further details have been provided so far.

In particular, the actuating system comprises one actuator or several actuator which acts/act on the resonator, for example on a respective adaptable optical element.

Preferably, the actuating system acts on the resonator, in particular on at least one adaptable optical element, for tuning locally a characteristic of the to be amplified radiation field.

For example, the locally tuned characteristic of the to be amplified radiation field is a phase shift and/or a direction of at least a local part of the to be amplified radiation field.

In some preferred embodiments, the actuating system acts at least optically on one or several elements of the resonator.

In some advantageous embodiments, at least an actuator of the actuating system acts at least thermally on one or several elements of the resonator, in particular on at least one adaptable optical element.

In some advantageous embodiments at least one actuator of the actuating system acts at least pneumatically on one element or several elements of the resonator, in particular on at least one adaptable optical element.

In preferred embodiments at least one actuator of the actuating system acts on the at least one laser active unit and/or the pumping energy source.

With regard to the sensor system no further detailed information has been given so far.

In particular, the sensor system comprises one sensor or several sensors for example for detecting values of parameters of the to be amplified radiation field and/or of the resonator.

In particular, at least one sensor of the sensor system detects local radiation field parameters, like for example a wave front and/or a local amplitude and/or a local phase shift and/or a local intensity profile.

In particular, at least one sensor of the sensor system detects properties of the electrical field of the to be amplified radiation field, for example its phase and/or amplitude, in particular a local variation thereof.

Advantageously, at least one sensor of the sensor system detects temporal variations in the to be amplified radiation field. For example the duration and/or shape of pulses of the to be amplified radiation field are detected by at least one sensor.

In particular, for example, at least one sensor is provided at at least one actuator of the actuating system. At least one sensor detects parameters of the actuating system, for example regarding its action on the resonator and corresponding values of control parameters, for example a pressure and/or a temperature variation and/or other control parameters.

In some advantageous embodiments, the sensor system comprises at least one sensor at the at least one laser active unit, for example providing the advantage of acquiring information essentially directly from the amplification of the to be amplified radiation field.

For example the sensor at the laser active unit detects a local intensity profile of the to be amplified radiation field and/or distortions in the laser active medium, which for example are thermally induced, and/or detects properties of the pumping energy.

In some preferred embodiments, the sensor system comprises at least one sensor at at least one of the one or several optical directing elements, which for example provides advantage of acquiring information on how the to be amplified radiation field is provided onto the laser active unit.

Preferably, the sensor system comprises at least one sensor at at least one of the one or several reflective end elements. For example, at this position an increase of one or several modes of the to be amplified radiation field are in particular good to detect.

For example, the sensor system comprises at least one sensor at the outcoupling element which for example provides the advantage to acquire information about the outcoupling.

In some advantageous embodiments, the sensor system comprises at least one sensor in an optical path of the outgoing amplified radiation field. This provides for example the advantage, to acquire information about the outgoing radiation field and whether this one complies with the required demands.

In advantageous embodiments, the sensor system comprises at least one sensor at at least one adaptable optical element of the optical assembly. This in particular provides the advantage that properties of the optical adaptable element, for example its deformation and/or temperature and/or the value of its control parameter, are acquired and/or that local properties of the to be amplified radiation field at the adaptable optical element, for example its local intensity profile and/or its local wave front and/or the local intensity of its modes, right at the adaptable optical element are acquired and therefore an adjustment of the adaptable optical element can be performed more precisely.

With respect to the to be amplified radiation field no further details have been given so far.

In some preferred embodiments the to be amplified radiation field is a continuous wave radiation field.

In other advantageous embodiments the to be amplified radiation field is a pulsed radiation field.

In some embodiments the radiation field as an essentially Gaussian transversal profile.

In some preferred embodiments, the transversal radiation profile is non-Gaussian.

In particular, the to be amplified radiation field is a laser beam.

In addition or alternatively the problem stated at the beginning is solved in embodiments of the invention by a method for amplifying a to be amplified radiation field in which a radiation amplifying device is used which comprises a resonator with an optical assembly defining an optical path for a to be amplified radiation field, a sensor system for detecting values of one parameter or several parameters of the radiation amplifying device and/or of the to be amplified radiation field, a controller signal transmittingly connected to the sensor system and the controller being designed to receive and to evaluate parameter values detected by the sensor system, an actuating system acting on the resonator in particular for altering its interaction with the to be amplified radiation field, and wherein in this method the controller controls the actuating system based on the received and evaluated parameter values.

In particular, within this method the controller receives parameter values of the amplifying device, in particular of the resonator and/or of the to be amplified radiation field and evaluates this values and controls the actuating system based on its evaluation upon which the actuating system acts on the resonator in particular for altering its interaction with the to be amplified radiation field whereas this acting is in accordance with control signals send by the controller and because the control by the controller is based on detected parameter values the control can be done more precisely for achieving a to be amplified radiation field which meets respective demands.

For example, further advantages as described in connection with the amplifying device also apply to the method and therefore it is fully referred to above given explanations.

In particular, within the method the sensor system, the controller and the actuating system built up a feedback control loop for the resonator and advantageously the control by the controller is improved due to the used feedback control loop.

In advantageous embodiments a mathematical model of at least the resonator and/or of the to be amplified radiation field is implemented in the controller. The controller evaluates the model based on the received parameter values and controls the actuating system based on that evaluation.

In particular, with respect to the used mathematical model and further features of the evaluation it is fully referred to the disclosure with respect to the radiation amplifying device concerning the mathematical model and the evaluation in order to avoid repetitions.

In preferred embodiments the method comprises that the controller at least estimates at least one characteristic property of the resonator and/or of the to be amplified radiation field and for example at least estimates a state of the resonator and/or of the to be amplified radiation field.

Preferably, the controller controls the actuating system based on that estimated characteristic property and/or estimated state.

In advantageous embodiments the controller at least estimates an interaction between the resonator and the to be amplified radiation field, for example an interaction of the optical assembly of the resonator and the to be amplified radiation field.

Preferably, the resonator controls the actuating system based on the estimated interaction.

Advantageously, the controller at least estimates a reaction of the resonator and/or of the to be amplified radiation field on an adjustment of a control variable.

In particular, before sending a control variable the controller estimates the reaction which would occur in the resonator and/or to the to be amplified radiation field in case the control variable is adjusted as evaluated.

In advantageous embodiments, the controller evaluates the estimate of the reaction of the resonator and/or of the to be amplified radiation field on an adjustment of one or several control variables.

Preferably, the controller evaluates based on the estimate whether to modify the adjustment of the control variable, in particular in cases in which the adjustment of the control variable does not meet requirements for the to be amplified radiation field or to a desired reaction on the adjustment, or to control the actuating system in accordance with the adjusted control variable, in particular sending a respective control signal with an adjusted control variable to the actuating system, in particular in cases in which the estimate of the reaction meets the requirements for the to be amplified radiation field and/or is within at least tolerable ranges meeting the desired outcome.

In advantageous embodiments, the controller evaluates the detected and received parameter values and/or controls the actuating system essentially in real-time during operation of the device, in particular during operation of amplifying the to be amplified radiation field.

With respect to the term "essentially in real-time" and preferred features associated thereto it is fully referred to the explanations given above in connection with the device in order to avoid repetitions.

In particular, the method comprises providing an amplified outgoing radiation field.

For example, due to the improved control it is also possible to obtain an amplified outgoing radiation field which meets with high accuracy users demands and is adjustable in a broad working range.

In particular, due to the improved control, the to be amplified radiation field and the outgoing amplified radiation field can be linely turned and precisely stabilized at a desired working point.

The outgoing amplified radiation field can be used for a variety of purposes.

In preferred embodiments, the outgoing amplified radiation field is used for material processing.

Furthermore, particularly preferred embodiments comprise method steps in particular concerning detecting parameter values and/or computations of the controller, for example estimations and/or evaluations, and/or control of the actuating system by the controller and/or the acting of the actuating system of the resonator, corresponding to features described in connection with the amplifying device and/or in the method entities are used, as for example the resonator and/or the sensor system and/or the controller and/or the actuating system, with one feature or several features as discussed in connection with the amplifying device and therefore it is fully referred to the explanations given above in order to avoid repetition.

In particular, advantages as discussed in connection with the amplifying device correspondingly apply to the method and therefore in order to avoid repetition it is fully referred to the explanations given above with respect to of the amplifying device.

In particular, features in preferred or advantageous embodiments or which are described in connection with the terms for example, or in particular or the like are optional features which can provide specific improvements to the invention but are however not essential for the inventive solution.

In particular, advantageous embodiments of the invention comprise the combination of features as defined by the following consecutively numbered embodiments.
1. Radiation amplifying device (100, 100a) comprising a resonator (110, 110a) with an optical assembly (112, 112a) defining an optical path (114) for a to be amplified radiation field (116), a sensor system (122) for detecting values of one parameter or several parameters of the radiation amplifying device (100, 100a) and/or of the to be amplified radiation field (116), a controller (124) signal transmittingly connected to the sensor system (122) and the controller (124) being designed to receive and to evaluate parameter values detected by the sensor system (122), an actuating system (126) acting on the resonator (110, 110a) in particular for altering its interaction with the to be amplified radiation field (116), and the actuating system (126) being controlled by the controller (124) based on the received and evaluated parameter values.
2. Radiation amplifying device (100, 100a) according to embodiment 1, wherein the sensor system (122), the controller (124) and the actuating system (126) build up a feedback control loop for the resonator (110, 110a).
3. Radiation amplifying device (100, 100a) according to one of the preceding embodiments, wherein a mathematical model of at least the resonator (110, 110a) and/or of the to be amplified radiation field (116) is implemented in the controller (124) and for controlling the actuating system (126) the controller (124) is programmed to evaluate the model based on the received parameter values.
4. Radiation amplifying device (100, 100a) according to one of the preceding embodiments, wherein the controller (124) is programmed to at least estimate at least one characteristic property, in particular a state, of the resonator (110, 110a) and/or of the to be amplified radiation field (116), and in particular to control the actuating system (126) based on that estimated characteristic property and/or estimated state.
5. Radiation amplifying device (100, 100a) according to one of the preceding embodiments, wherein the controller (124) is programmed to at least estimate an interaction between the resonator (110, 110a) and the to be amplified radiation field (116) and in particular to control the actuating system (126) based on that estimated interaction.
6. Radiation amplifying device (100, 100a) according to one of the preceding embodiments, wherein the controller (124) is programmed to at least estimate a reaction of the resonator (110, 110a) and/or of the to be amplified radiation field (116) on an adjustment of a control variable.
7. Radiation amplifying device (100, 100a) according to the preceding embodiment, wherein the controller (124) is programmed to evaluate the estimate of the reaction, in particular to evaluate based on that estimate whether to modify the adjustment of the control variable or to control the actuating system (126) in accordance with the adjusted control variable.
8. Radiation amplifying device (100, 100a) according to one of the preceding embodiments, wherein the implemented model comprises algebraic equations and/or differential equations in particular regarding the resonator (110, 110a), the to be amplified radiation field (116), and their interaction.
9. Radiation amplifying device (100, 100a) according to one of the preceding embodiments, wherein a machine learning routine is implemented in the controller (124) and in particular the controller (124) is programmed to input the detected and received parameter values into the machine learning routine during operation and in particular the controller (124) is programmed to control the actuating system (126) based on the outcome of that machine learning routine.
10. Radiation amplifying device (100, 100a) according to one of the preceding embodiments, wherein a proportional-integral-derivative control algorithm is implemented in the controller (124) and in particular the controller (124) is programmed to control the actuating system (126) at least partly based on that algorithm.
11. Radiation amplifying device (100, 100a) according to one of the preceding embodiments, wherein the controller (124) is programmed to evaluate the parameter values and to control the actuating system (126) essentially in real-time during operation of the device.
12. Radiation amplifying device (100, 100a) according to one of the preceding embodiments, wherein the controller (124) is programmed to control the actuating system (126) based on a series of previously detected and received parameter values.
13. Radiation amplifying device (100, 100a) according to one of the preceding embodiments, wherein the resonator (110, 110a) comprises at least one laser active unit (142).
14. Radiation amplifying device (100, 100a) according to one of the preceding embodiments, wherein the resonator (110, 110a) comprises at least one pumping energy source (152) which in particular provides a pumping radiation field (154).
15. Radiation amplifying device (100, 100a) according to one of the preceding embodiments, wherein the optical assembly comprises at least one adaptable optical element (216, 216a, 218, 218a, 226, 226a, 228, 228a, 232, 232a), in particular an adaptable mirror.
16. Radiation amplifying device (100, 100a) according to one of the preceding embodiments, wherein the optical assembly (112, 112a) comprises at least one of at least one directing optical element (226, 226a, 228, 228a) directing the to be amplified radiation field (116) onto at least one laser active unit (142) and/or at least one reflective end element (216, 216a, 218, 218a) and/or one outcoupling element (232) for providing an outgoing radiation field (236), wherein in particular at least one of these elements is an adaptable optical element.
17. Radiation amplifying device (100, 100a) according to one of the preceding embodiments, wherein at least one actuator of the actuating system (126) acts optically and/or thermally and/or pneumatically onto at least one element of the resonator (110, 110a), in particular onto at least one adaptable optical element.
18. Radiation amplifying device (100, 100a) according to one of the preceding embodiments, wherein at least one actuator of the actuating system (122) acts at least on one of at least one adaptable optical element and/or at least one laser active unit (142) and/or at least one pumping energy source (152).
19. Radiation amplifying device (100, 100a) according to one of the preceding embodiments, wherein the sensor system (122) comprises at least one sensor (272, 274, 276) at at least one of at least one directing optical element (226, 226a, 228, 228a) and/or at least one reflective end element (216, 216a, 218, 218a) and/or at an out coupling element (232) and/or at a laser active unit (172) and/or within the optical path (114) for the to be amplified radiation field (116) and/or within an optical path of an outgoing radiation field (236) and/or at at least one actuator of the actuating system.
20. Method for amplifying a to be amplified radiation field (116) wherein a radiation amplifying device (100, 100a) is used, which comprises a resonator (110, 110a) with an optical assembly (112, 112a) which defines an optical path for the to be amplified radiation field (116), a sensor system (122) for detecting values of one parameter or several parameters of the radiation amplifying device (100, 100a) and/or of the to be amplified radiation field (116), a controller (124) signal transmittingly connected to the sensor system (122) and the controller being designed to receive and to evaluate parameter values detected by the sensor system (122), an actuating system acting on the resonator (110, 110a) in particular for altering its interaction with the to be amplified radiation field (116), wherein the controller (124) controls the actuating system (126) based on the received and evaluated parameter values.
21. Method according to the preceding embodiment wherein the sensor system (122), the controller (124) and the actuating system (126) built up a feedback control loop for the resonator (110, 110a).
22. Method according to one of the preceding embodiments relating to a method, wherein a mathematical model of at least the resonator (110, 110a) and/or of the to be amplified radiation field (116) is implemented in the controller and the controller evaluates the model based on the received parameter values and controls the actuating system (126) accordingly.
23. Method according to one of the preceding embodiments relating to a method, wherein the controller (124) at least estimates at least one characteristic property, and in particular a state, of the resonator (110, 110a) and/or of the to be amplified radiation field (116) and in particular controls the actuating system (126) based on that estimated characteristic property and/or estimated state.
24. Method according to one of the preceding embodiments relating to a method, wherein the controller (124) at least estimates an interaction between the resonator (110, 110a), in particular its optical assembly (112, 112a), and the to be amplified radiation field (116) and in particular controls the actuating system (126) based on that estimated interaction.
25. Method according to one of the preceding embodiments relating to a method, wherein the controller (124) at least estimates a reaction of the resonator (110, 110a) and/or of the to be amplified radiation field (116) on an adjustment of a control variable.
26. Method according to one of the preceding embodiments relating to a method, wherein the controller evaluates the estimate of the reaction and in particular decides based on that estimate whether to modify the adjustment of the control variable or to control the actuating system (126) in accordance with the adjusted control variable.
27. Method according to one of the preceding embodiments relating to a method, wherein the controller evaluates the parameter values and controls the actuating system (126) essentially in real time during operation of the device.
28. Method according to one of the preceding embodiments relating to a method, wherein an amplified outgoing radiation field (236) is provided and used for material processing.

Further advantages and preferred embodiments are described in connection with several exemplary embodiments of the invention described below and in connection with the accompanying drawings.

In the drawings:
- Fig. 1: shows a first embodiment of a radiation amplifying device;
- fig. 2: shows a schematic cross-section of a by heating adaptable optical element;
- fig. 3: shows the adaptable optical element of fig. 2 in view of the direction indicated with III in fig. 2 on a side of the element being hit by the to be amplified radiation field;
- fig. 4: shows a schematic cross-section of a by a radiation field adaptable optical element;
- fig. 5: shows a view of the element of fig. 4 in direction indicated with V in fig. 4 on a side which being hit by the to be amplified radiation field;
- fig. 6: shows a schematic cross-sectional view of a by pressure adaptable optical element;
- fig. 7: shows the element of fig. 6 in direction indicated with VII in fig. 6 on a side of the element being hit by the to be amplified radiation field;
- fig. 8: a schematic chart of a method for amplifying the to be amplified radiation field using the radiation amplifying device and
- fig. 9: shows a schematic view of a second embodiment of a radiation amplifying device.

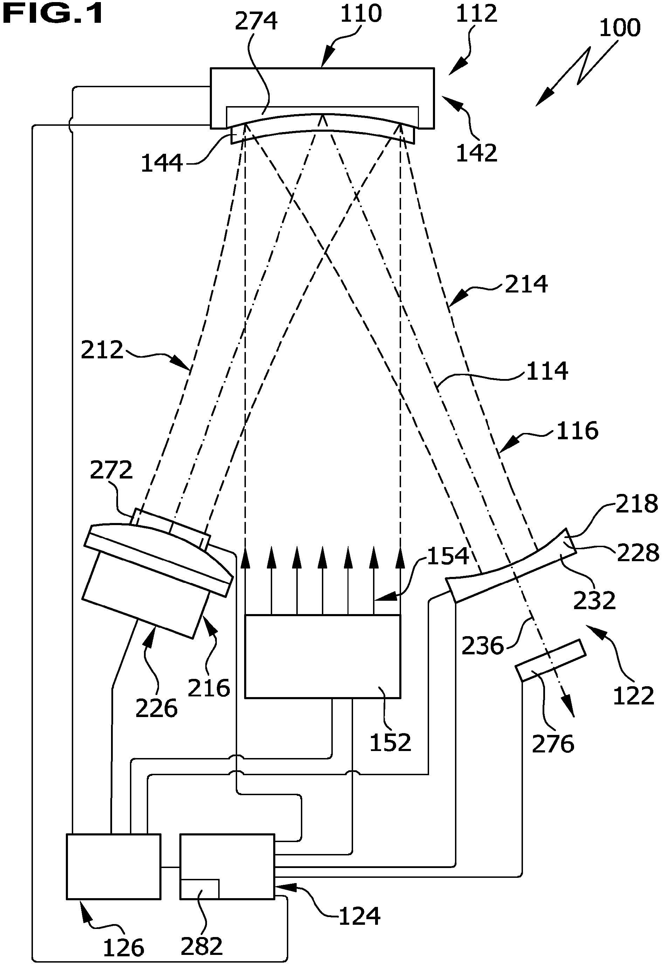

A first embodiment of a radiation amplifying device 100, which is exemplarily shown in fig. 1, comprises a resonator 110 with an optical assembly 112 which defines an optical path 114 for a to be amplified radiation field 116. The radiation amplifying device 100 further comprises a sensor system 122, a controller 124 and an actuating system 126 for acting on the resonator 110.

The controller 124 is signal transmittingly connected to the sensor system 122 and the actuating system 126 in order to receive from the sensor system 122 at least one value detected by the sensor system 122 and to control the actuating system 126 based on the at least one detected and received value.

The optical assembly 112 comprises at least one laser active unit 142 with a laser active medium 144 which is arranged in the optical path 114 such that the to be amplified radiation field 116 passes through the laser active medium 144 and gets amplified by it.

In particular, during operation of the amplifying system 100 there is a population inversion within the laser active medium 144 due to which the to be amplified radiation field 116 is amplified.

The resonator 110 comprises a pumping energy source 152 which pumps energy into the laser active medium 144 to amplify the to be amplified radiation field 116 and in particular for establishing the population inversion. For example, the pumping energy source 152 emits a pumping radiation field 154 which penetrates the laser active medium 144 and introduces the pumping energy.

The optical assembly 112 comprises several optical elements for defining the optical path 114 which in this embodiment comprises several branches 212, 214.

The optical path 114 is defined between two reflective end elements 216, 218 at which a respective branch 212, 214 is reflected to propagate in opposite direction along the optical path 114.

In this embodiment the laser active unit 142 comprises a reflective element, for example a reflective layer, at a backside of the laser active medium 144 opposite to the side on which the to be amplified radiation field 116 hits the laser active medium 144 such that the radiation field 116 passes twice through the laser active medium 144 on the travel form one reflective end element 216, 218 to the other reflective end element 218, 216.

There are furthermore optical directing elements 226, 228 which direct a respective branch 212, 214 onto the laser active medium 144.

In this embodiment the end elements 216, 218 direct the respective branches 212 and 214, respectively, directly onto the laser active medium 144 and are therefore also the directing elements 226 and 228. Accordingly, each of the branches 212, 214 is defined between the reflective element of the laser active unit 142 and one of the end elements 216, 218.

Furthermore, the optical assembly 112 comprises an out coupling element 232 which couples a part of the to be amplified radiation field 116 out from the optical path 114 to provide an outgoing radiation field 236 which is provided for further use as an amplified radiation field. For example, the outgoing radiation field 236 is used for material processing.

For example the reflective end element 218 is partly transparent, such that a part of to be amplified radiation field 116 hitting element 218 passes through element 218 and is provided as amplified outgoing radiation field 236 and the other part, in particular the majority, is reflected.

The actuating system 126 cooperates with one optical element or several optical elements of the optical assembly 112 which is/are adaptable by a respective actuator of the actuating system 126. Therefore the interaction of the optical assembly 112 with the to be amplified radiation field 116 is adaptable and thereby characteristics of the to be amplified radiation field can be adjusted.

In particular with the one or several adaptable optical elements on which the actuating system acts global and local characteristics of the optical path 114 are adjustable and therefore characteristics of the to be amplified radiation field 116 propagating along that optical path 114 can be tuned, such as for example phase retardations are controllable and/or the resonance of single modes of the radiation field 116 can be enhanced while other modes are suppressed.

In this embodiment the end element 216 which is also the directing element 226 is designed as an adaptable optical element.

The adaptable optical element, here the reflective end element 216 and directing element 226, and in variations of the embodiment other optical elements of the optical assembly 112 can be realized in different ways.

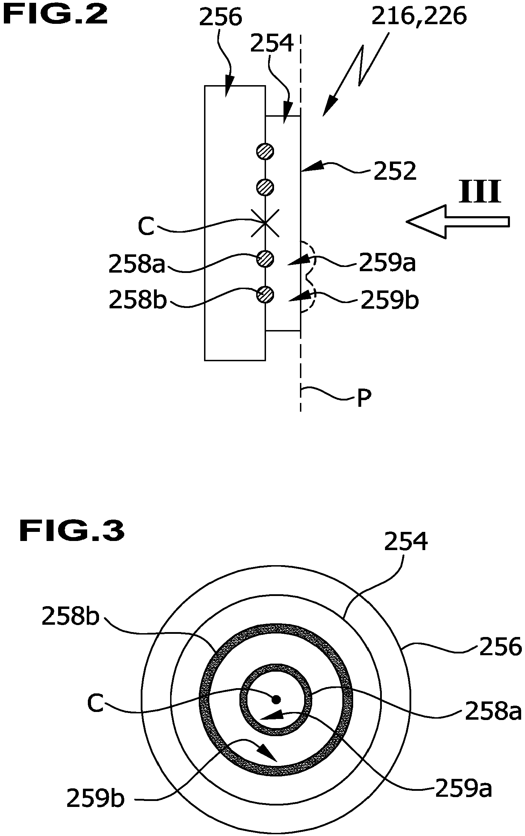

For example, the adaptable optical element 116, 226 comprises a reflective layer 252 provided on thermally adaptable plate 254, which is for example a glass plate, and on a side opposite to the reflective layer 252 there is provided a cooling body 256, as exemplarily shown in fig. 2 and 3.

Furthermore, the optical element 216, 226 comprises locally separated heating elements 258a and 258b ring-like around a common center C and run in particular through the adaptable plate 254 or between the adaptable plate 254 and the cooling body 256.

The heating elements 258 are separately heatable and therefore separate, for example around the common center C ring like, regions 259a, 259b along the respective heating element 258a, 258b are provided which are separately adjustable.

Upon heating the respective heating elements 258 a thermal expansion of the respective region 259 can be achieved and a geometry of the surface of the reflective layer 252 on which the to be amplified radiation field 116 hits can be controlled in a defined manner by heating the single heating elements 258 accordingly. Due to the heating the material of the thermally adaptable plate 154 expands in the respective region 259 correspondingly and the surface in the respective region 259 raises over a in particular flat reference shape of an unheated state.

In particular, with the raised reflective regions 259 at the adaptable optical element 116, 226 non-spherical distortions in the to be amplified radiation field 116 can be compensated.

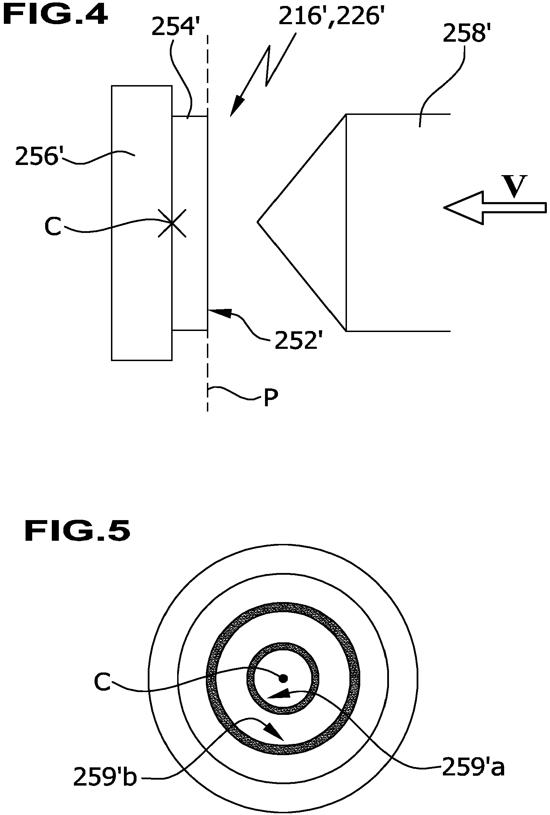

In another variation of an adaptable optical element 216', 226', exemplarily shown in figs. 4 and 5, a reflective layer 252' is provided on a thermally adaptable plate 254' and preferably a cooling body 256' is arranged on a side of plate 254' opposite to the reflective layer 252'.

This plate 254' is made of a material which can be heated up by a heating radiation field 258'. The reflective layer 252' is in this variation highly reflective for the to be amplified radiation field 116 but at least approximately transparent for the heating radiation field 258' and the heating radiation field 258' has a wave length, for example in the infrared range, which is absorbed by the material of plate 254' such that regions 259' of plate 254' thermally expand depending on the local intensity of heating radiation field 258' hitting the respective region 259'.

Therewith the surface of reflective layer 252' can be adapted in a controlled manner by providing a heating radiation field 258' with local variations in its intensity profile perpendicular to its propagation direction. The locally varying profile results to a locally varying heating of adaptable plate 254' and accordingly to respective raised regions 259'.

For example, the heating radiation field 258' has a radially varying intensity profile for achieving ring like heated regions 259'a, 259'b around a common center C which raise over a in particular flat reference shape of an unheated state and the single heated regions 259' raise over the reference shape depending on the respective intensity of heating radiation field 258' hitting this region.

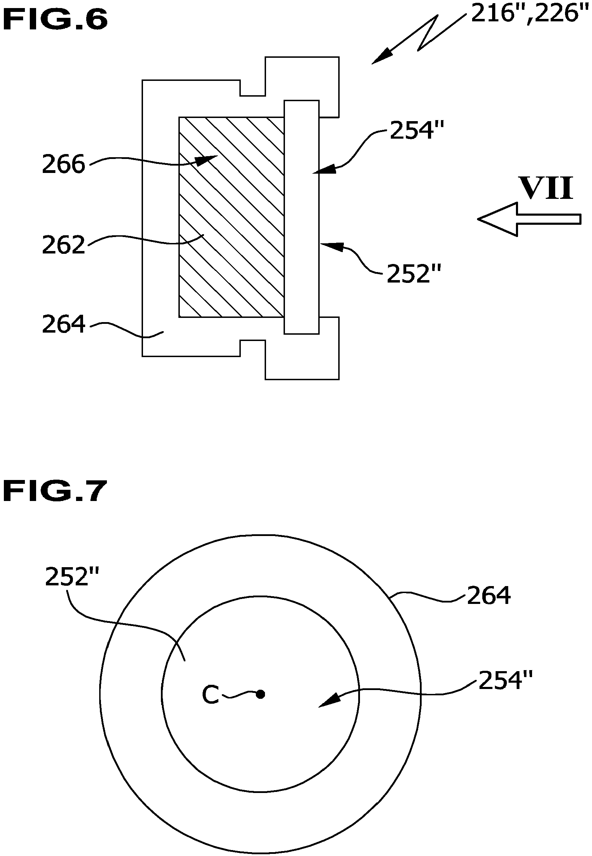

In some variants of the embodiment an adaptable optical element 216", 226", exemplarily shown in figs. 6 and 7, is pressure actuated.

An adaptable plate 254" is provided on one side with a reflective layer 252" and is abutted on the other side by a pressurisable fluid 262.

In particular, the adaptable plate 254" confines together with a housing 264 a chamber 266 in which the pressurisable fluid 262 is present.

The housing is made more stable than the adaptable plate 254" such that upon a change of the pressure of the fluid 262 the adaptable plate 254 reacts thereon with adapting it's in particular spherical shape correspondingly. For example the housing 264 holds the adaptable plate 254" at an outer rim of the same such that the central part of the plate 254" is able to react on a difference in the pressure of the fluid by changing its in particular spherical shape.

Accordingly, with adjusting the pressure of the fluid 262 the shape of the reflective layer 252" on the adaptable plate 254" can be finely tuned, in particular to be convex or concave shaped, and therefore its interaction with the to be amplified radiation field 116 adapted in particular in a rotational symmetric manner for example to correct spherical distortions in the radiation field.

For more details and variations on how with adaptable optical elements, in particular with spherical and aspherical deformable mirrors and/or optically adaptable mirrors, the optical assembly 112, its defined optical path 114 and its interaction with the to be amplified radiation field 116 can be manipulated for influencing characteristics of the to be amplified radiation field 116, in particular its local and/or temporal properties, it is fully referred to S. Piehler, et. al., "Deformable Mirrors for Intra-Cavity Use in High-Power Thin-Disk Lasers.", Optics Express 25(4): 4254, 2017, >Re S. Piehler, "Resonatorinterne Kompensation Thermisch Induzierter Wellenfrontstorungen in Hochbrillanten Scheibenlasern.", Dissertation, Universitat Stuttgart 2017, and K. Schmidt, et. al, "Modellierung optisch adressierter Spiegel für adaptive Hochleistungslaser", at-Automatisierungstechnik 66(7), 2018, and K. Schmidt, "Modeling and Simulating the Thermoelastic Deformation of Mirrors Using Transient Multilayer Models", Mechatronics, 53, 2018, which are incorporated herewith by reference.

In the embodiment shown exemplarily in fig. 1 the end element 216 is an adaptable optical element but in variations of the embodiment also other optical elements of the optical assembly 112, for example the other end element 218 and/or an optical element of the laser active unit 142 are additionally or instead designed to be adaptable optical elements.

The sensor system 122 comprises one or several sensors for detecting values of characteristics of the to be amplified radiation field 116 and for example values of other characteristics of the radiation amplifying device 100, in particular of the resonator 110, for example of the one or several adaptable optical elements 216 and/or the laser active unit 142.

For example a sensor 272 is provided at one of the end elements 216, 218 for example for detecting an increase in a mode of the to be amplified radiation field 116.

Preferably, the sensor system 122 comprises a sensor, which in the simple embodiment shown in fig. 1 is also the sensor 272, at the adaptable optical element in particular to detect the state of the adaptable element, for example the shape of the reflective layer 252, and its interaction with the radiation field 116 as well as the reaction and potential distortions in the radiation field 116 due to said interaction as well as the feedback of the radiation field 116 on the adaptable optical element.

For example the sensor system 122 comprises a sensor 274 which is provided at the laser active unit 142 in particular for detecting distortions of the to be amplified radiation field induced by the laser active medium 144 and for example detecting values of the laser active unit 142, for example the temperature of the laser active medium 144, in order to acquire characteristics of the state of the laser active unit 142, and/or for detecting for example properties of the pumping radiation field 154.

For example, the sensor system 122 comprises a sensor 276 which is provided in the outgoing radiation field 236 in order to capture values of one or several characteristics of the outgoing radiation field 236.

In particular a sensor, for example sensor 274, comprises a camera for detecting local radiation field properties such as a locally varying intensity profile.

Preferably a sensor, for example sensor 276, detects a wave front characteristic of the radiation field and is for example a Shack-Hartmann-Sensor.

For example one of the sensors is a Grenouille based sensor for example to detect temporal properties, such as characteristics of a pulsed radiation field.

In advantageous variants of the embodiment, the sensor system 122 comprises further sensors for detecting properties of the laser active unit 142, for example temperature and deformations of the laser active medium 144, and/or properties of actuators of the actuating system 126, for example concerning the heating of heating elements 258 or heating radiation field 258' or the pressure of fluid 262 as well as the associated shape and deformation of adaptable plate 254, 254', 254" and therefore of reflective layer 252, 252', 252".

The sensors 272, 274, 276 of the sensor system 122 are data transmittingly connected with the controller 124 and provide their detected values to the controller 124 for further processing.

The controller 124 evaluates the received detected values. For example, controller 124 determines deficiencies in the to be amplified radiation field and suitable adaptations in the resonator 110 to correct these deficiencies and transmits the required adaptations as control signals to the actuating system 126 which thereon acts on the adaptable optical elements of the optical assembly 112 for realizing the adjustments.

The actuating system 126 comprises one actuator or several actuators, such as heating elements 258 or a source for heating radiation field 258' or values and/or pressurizer for controlling the pressure of fluid 262.

The actuator acts as reaction of the control signals received by the controller 124 on the respective adaptable optical element and adjusts thereby the interaction with the radiation field 116 in accordance with the control signals for correcting the deficiencies. For example, the actuating system 126 suitably adjusts the heating in the heating elements 258 and/or the intensity profile of the heating radiation field 258' and/or the pressure of the fluid 262 to adapt the shape of the reflective layer 252, 252', 252" for example for correcting local phase shifts and/or distortions of to be amplified radiation field.

In order to evaluate the received values and to determine the state of the system comprising the resonator 110 and the to be amplified radiation field 116, a model of this system is implemented in the controller 124 for example as a system of algebraic and/or differential equations.

Depending on the system and the demanded accuracy the differential equations are partial differential equations and/or ordinary differential equations.

Based on the evaluation of the model with the received detected variables the controller determines the necessity of corrections to control variables such as the heating of the heating elements 258 and/or the intensity profile of the heating radiation field 258' and/or the pressure of the pressurizable fluid 262.

In some variants of the embodiment for the control of some of the state variables a proportional-integral-derivative controller (PID controller) is implemented in the controller 124 and used during operation.

In some variants of the embodiment a machine learning process, for example an artificial neuronal network and/or a reinforcement learning process, is implemented in the controller and used during operation for improving the model and obtaining suitable values for the control variables for correcting deficiencies in the to be amplified radiation field 116.

The controller 124 for example comprises a memory 282 for storing data. For example, the prestored data concern parameters of the used model, preferable ranges and/or values of characteristics of the to be amplified radiation field 116 and/or of the resonator 110 and its elements.

In particular, the controller 124 is enabled to evaluate in addition a reaction of the to be amplified radiation field 116 on a determined correction as well as the corresponding feedback of the to be amplified radiation field on the elements of resonator 110 and whether the determined correction indeed provides an optimized radiation field 116.

If according to the evaluation the determined and planned correction indeed improves the to be amplified radiation field 116 a corresponding control signal is sent to the actuating system 126 and otherwise the controller 124 uses the evaluated reaction of the amplified radiation field for improving the to be corrected value of the control variable and evaluates again its model for determining an improved value for the control variable.

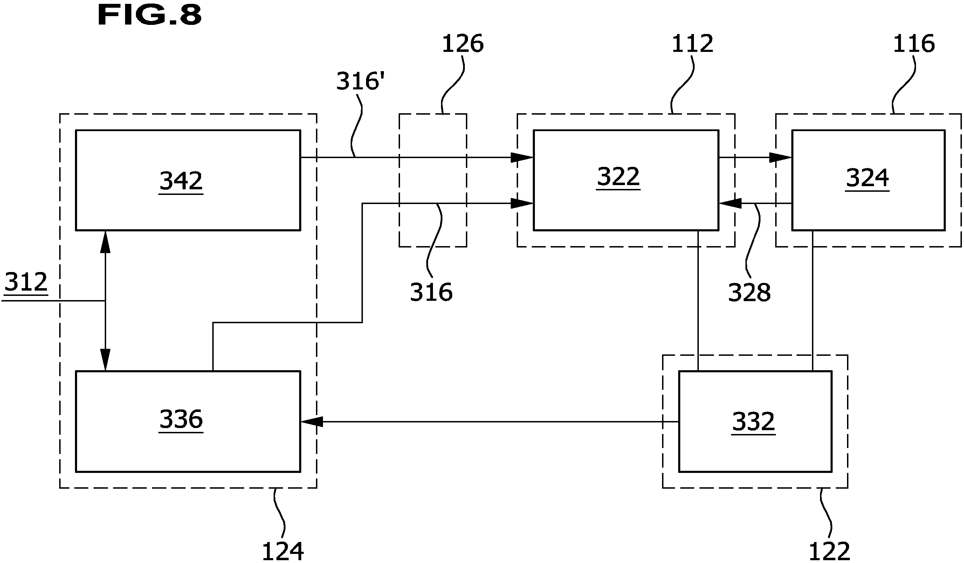

The radiation amplifying device 100 operates in particular according to a method as follows and exemplarily sketched in fig. 8.

Desired parameters 312 of to be amplified radiation field 116 are inputted to a controller 124 for controlling the resonator 110 and to be amplified radiation field 116.

The controller 124 determines and evaluates appropriate values of control variables using its implemental model and sends these via control signals 316 to the actuating system 126 which acts on the resonator 110 in accordance with the sent and received values of the control variables. Accordingly, the adaptable optical elements and therefore the interaction of the same with the to be amplified radiation field 116 is adjusted and for example also other properties of the resonator, for example the provision with pumping energy.

Due to this adjustment 322 of the resonator 110 an adjustment 324 of the to be amplified radiation field 116 is achieved.

Because the to be amplified radiation field 116 is manipulated on, there is also a feedback 328 onto the resonator 110, for example due to the changed characteristics of the radiation field 116 the optical elements heat up locally differently which in turn also again affects the to be amplified radiation field 116.

The state of the resonator 110 and of the to be amplified radiation field 116 such as their characteristics and their mutual interference are detected in a step 332 by the one or several sensors 272, 274, 276 of the sensor system 122.

The detected values of the sensors are sent back to the controller 124 which evaluates in a step 336 the detected values and determines based on the implemented model again necessary corrections.

In particular, during the evaluation 336 a planned adjustment is determined and based on the implemented model the reaction of the resonator 110 and the to be amplified radiation field 116 and preferably also the resulting potential feedback between these are estimated and the results are evaluated if the desired correction is achieved or whether the planned correction and the corresponding values of the control variables have to be readjusted.

In particular, therewith a feedback control of the unit of resonator 110 and the amplified radiation field 116 together with the mutual interference is achieved.

In particular, the aforementioned steps are continuously and regularly repeated during operation of radiation amplifying device 100, such that a control of the to be amplified radiation field in essentially real time can be achieved and for example during operation also non-linear effects can be considered in the evaluation of controller 124 and its control of actuating system 126.

Preferably, during operation of radiation field system 100, the sensors 272, 274, 276 of sensor system 112 detect in a regular and continuously manner the value of the respective characteristic, for example at a rate which is in the range of at least approximately 10 Hz to 50 Hz.

In some variants of the embodiment there is also a non-feedback control 342 implemented in the controller 124 to which also the desired parameters 312 are inputted. The controller 123 controls corresponding optical elements via the actuating system 126 by sending respective control signals 316'.

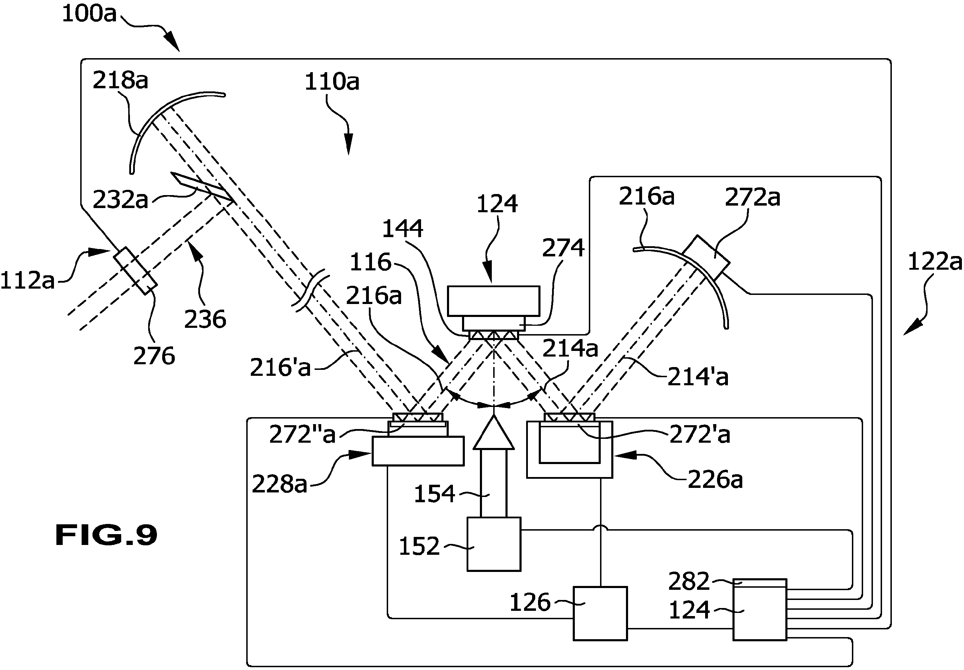

In a second embodiment of a radiation amplifying device 100a, which is exemplarily shown in fig. 9, the elements which are essentially the same as in the first embodiment and/or fulfill at least essentially the same function as an element of the first embodiment are designated with the same reference sign and in particular if the specific arrangement of the second embodiment is to be emphasized a suffix "a" is added to the respective reference sign.

A resonator 110a of the radiation amplifying device 100a comprises a laser active unit 124 with a laser active medium 144 and an optical assembly 112a with two directing elements 226a and 228a which direct respective branches 214a and 216a of the to be amplified radiation field 116 onto the laser active medium 144.

In particular the branches 216a and 214a hit the laser active medium on one side and on the opposite side of the laser active medium 144 there is a reflective layer for reflecting the to be amplified radiation field 116 from one of the branches 216a, 214a to the other one 214a, 216a, respectively.

The directing elements 226a and 228a are in particular designed as adaptable mirrors which for example are thermally and/or pneumatically adaptable by the actuating system 126 as described in connection with the figs. 2 to 7.

In particular, one of the optical elements, here the optical elements 126a, is adaptable in a rotational symmetric manner for correcting for spherical distortions of the to be amplified radiation field 116 and another optical element, here the optical element 228a, is adaptable with several degrees of freedom for correcting non-spherical distortions in the to be amplified radiation field 116.

The radiation field of branch 214a hitting directing optical element 226a is reflected by the same into another branch 214'a towards a reflective end element 216a which reflects the to be amplified radiation field 116 back to optical element 226a and the radiation field of branch 216a hitting directing optical element 228a is reflected by the same and directed to another reflective end element 218a which reflects the radiation field back to optical element 228a, such that these optical elements built up a resonant optical assembly for at least a preferred mode of to be amplified radiation field 116. Furthermore, optical assembly 112a comprises an outcoupling element 232a for providing an outgoing radiation field 236. For example outcoupling element 232a is a partly reflecting element provided in branch 216'a from directing optical element 262a to end element 218a.

To be amplified radiation field 116 partly passes through the outcoupling element 232a to stay within the resonator and is partly reflected by the same providing the outgoing radiation field 236.

The sensor system 122a comprises several sensors for detecting characteristics and the states of the to be amplified radiation field 116 and the resonator 110a.

For example a sensor 272a is provided at one reflective end element, here at reflective end element 216a.

Preferably there is also provided a sensor 274 at the laser active unit 142.

In particular at least at one directing element 226a, 228a there is provided a respective sensor 272'a and/or 272"a, respectively.

For example, there is also provided a sensor 276 for detecting the characteristics of the outgoing radiation field 236.

The sensors of the sensor system 122a are signal transmittingly connected with the controller 124.

The controller 124 evaluates the received detected values and determines suitable values for control variables, in particular as explained in connection with the controller 124 of the first embodiment and in connection with fig. 8.

The controller 124 is signal transmittingly connected to a actuating system 126 which acts in particular with respective actuators on the adaptable optical elements 226a and 228a for adjusting these in accordance with the values of the control variables for adjusting the interaction with the to be amplified radiation field 116 and optimizing the characteristics thereof at least essentially as explained in connection with the first embodiment.

In particular, the other or not explicitly mentioned features of the radiation field amplifying system 100a are at least essentially the same as described in connection with a radiation amplifying device 100 of the first embodiment.

In particular, features and arrangements of the radiation field amplifying systems 100 and 100a of the first and second embodiments are interchangeable.

In other embodiments a radiation field amplifying system comprises several laser active units.

For example, there is also the possibility to build up entities of one or several laser active units 142 and optical elements with one or several of these optical elements being adjustable and to combine several such entities as desired for the amplification of the to be amplified radiation field 116 between two reflective end elements 218 and 216 to build up a resonator.

For particular preferred arrangements of the resonator 110 of radiation amplifying device for example regarding the reflective end elements, the adjustable optical elements, the laser active units and the arrangements in the design of the same it is referred fully to the disclosure of
DE 10 2008 008 078 A1.

## Claims

1. Radiation amplifying device (100, 100a) comprising a resonator (110, 110a) with an optical assembly (112, 112a) defining an optical path (114) for a to be amplified radiation field (116), a sensor system (122) for detecting values of one parameter or several parameters of the radiation amplifying device (100, 100a) and/or of the to be amplified radiation field (116), a controller (124) signal transmittingly connected to the sensor system (122) and the controller (124) being designed to receive and to evaluate parameter values detected by the sensor system (122), an actuating system (126) acting on the resonator (110, 110a) in particular for altering its interaction with the to be amplified radiation field (116), and the actuating system (126) being controlled by the controller (124) based on the received and evaluated parameter values.

2. Radiation amplifying device (100, 100a) according to claim 1, wherein the sensor system (122), the controller (124) and the actuating system (126) build up a feedback control loop for the resonator (110, 110a).

3. Radiation amplifying device (100, 100a) according to one of the preceding claims, wherein a mathematical model of at least the resonator (110, 110a) and/or of the to be amplified radiation field (116) is implemented in the controller (124) and for controlling the actuating system (126) the controller (124) is programmed to evaluate the model based on the received parameter values,
wherein in particular the implemented model comprises algebraic equations and/or differential equations in particular regarding the resonator (110, 110a), the to be amplified radiation field (116), and their interaction and/or
wherein in particular a machine learning routine is implemented in the controller (124) and in particular the controller (124) is programmed to input the detected and received parameter values into the machine learning routine during operation and in particular the controller (124) is programmed to control the actuating system (126) based on the outcome of that machine learning routine and/or
wherein in particular a proportional-integral-derivative control algorithm is implemented in the controller (124) and in particular the controller (124) is programmed to control the actuating system (126) at least partly based on that algorithm.

4. Radiation amplifying device (100, 100a) according to one of the preceding claims, wherein the controller (124) is programmed to at least estimate at least one characteristic property, in particular a state, of the resonator (110, 110a) and/or of the to be amplified radiation field (116), and in particular to control the actuating system (126) based on that estimated characteristic property and/or estimated state and/or
wherein the controller (124) is programmed to at least estimate an interaction between the resonator (110, 110a) and the to be amplified radiation field (116) and in particular to control the actuating system (126) based on that estimated interaction and/or
wherein the controller (124) is programmed to at least estimate a reaction of the resonator (110, 110a) and/or of the to be amplified radiation field (116) on an adjustment of a control variable,
wherein in particular the controller (124) is programmed to evaluate the estimate of the reaction, in particular to evaluate based on that estimate whether to modify the adjustment of the control variable or to control the actuating system (126) in accordance with the adjusted control variable.

5. Radiation amplifying device (100, 100a) according to one of the preceding claims, wherein the controller (124) is programmed to evaluate the parameter values and to control the actuating system (126) essentially in real-time during operation of the device, and/or
wherein the controller (124) is programmed to control the actuating system (126) based on a series of previously detected and received parameter values.

6. Radiation amplifying device (100, 100a) according to one of the preceding claims, wherein the resonator (110, 110a) comprises at least one laser active unit (142) and/or
wherein the resonator (110, 110a) comprises at least one pumping energy source (152) which in particular provides a pumping radiation field (154).

7. Radiation amplifying device (100, 100a) according to one of the preceding claims, wherein the optical assembly comprises at least one adaptable optical element (216, 216a, 218, 218a, 226, 226a, 228, 228a, 232, 232a), in particular an adaptable mirror and/or
wherein the optical assembly (112, 112a) comprises at least one of at least one directing optical element (226, 226a, 228, 228a) directing the to be amplified radiation field (116) onto at least one laser active unit (142) and/or at least one reflective end element (216, 216a, 218, 218a) and/or one outcoupling element (232) for providing an outgoing radiation field (236), wherein in particular at least one of these elements is an adaptable optical element.

8. Radiation amplifying device (100, 100a) according to one of the preceding claims, wherein at least one actuator of the actuating system (126) acts optically and/or thermally and/or pneumatically onto at least one element of the resonator (110, 110a), in particular onto at least one adaptable optical element and/or
wherein at least one actuator of the actuating system (122) acts at least on one of at least one adaptable optical element and/or at least one laser active unit (142) and/or at least one pumping energy source (152).

9. Radiation amplifying device (100, 100a) according to one of the preceding claims, wherein the sensor system (122) comprises at least one sensor (272, 274, 276) at at least one of at least one directing optical element (226, 226a, 228, 228a) and/or at least one reflective end element (216, 216a, 218, 218a) and/or at an out coupling element (232) and/or at a laser active unit (172) and/or within the optical path (114) for the to be amplified radiation field (116) and/or within an optical path of an outgoing radiation field (236) and/or at at least one actuator of the actuating system.

10. Method for amplifying a to be amplified radiation field (116) wherein a radiation amplifying device (100, 100a) is used, which comprises a resonator (110, 110a) with an optical assembly (112, 112a) which defines an optical path for the to be amplified radiation field (116), a sensor system (122) for detecting values of one parameter or several parameters of the radiation amplifying device (100, 100a) and/or of the to be amplified radiation field (116), a controller (124) signal transmittingly connected to the sensor system (122) and the controller being designed to receive and to evaluate parameter values detected by the sensor system (122), an actuating system acting on the resonator (110, 110a) in particular for altering its interaction with the to be amplified radiation field (116), wherein the controller (124) controls the actuating system (126) based on the received and evaluated parameter values.

11. Method according to the preceding claim, wherein the sensor system (122), the controller (124) and the actuating system (126) built up a feedback control loop for the resonator (110, 110a).

12. Method according to one of the preceding claims relating to a method,
wherein a mathematical model of at least the resonator (110, 110a) and/or of the to be amplified radiation field (116) is implemented in the controller and the controller evaluates the model based on the received parameter values and controls the actuating system (126) accordingly.

13. Method according to one of the preceding claims relating to a method, wherein the controller (124) at least estimates at least one characteristic property, and in particular a state, of the resonator (110, 110a) and/or of the to be amplified radiation field (116) and in particular controls the actuating system (126) based on that estimated characteristic property and/or estimated state and/or
wherein the controller (124) at least estimates an interaction between the resonator (110, 110a), in particular its optical assembly (112, 112a), and the to be amplified radiation field (116) and in particular controls the actuating system (126) based on that estimated interaction and/or
wherein the controller (124) at least estimates a reaction of the resonator (110, 110a) and/or of the to be amplified radiation field (116) on an adjustment of a control variable and/or
wherein the controller evaluates the estimate of the reaction and in particular decides based on that estimate whether to modify the adjustment of the control variable or to control the actuating system (126) in accordance with the adjusted control variable.

14. Method according to one of the preceding claims relating to a method,
wherein the controller evaluates the parameter values and controls the actuating system (126) essentially in real time during operation of the device.

15. Method according to one of the preceding claims relating to a method,
wherein an amplified outgoing radiation field (236) is provided and used for material processing.
